# EUROPEAN PATENT SPECIFICATION

(11) **EP 3 972 075 B1**
(45) Date of publication and mention of the grant of the patent: **28.01.2026**
(21) Application number: 21153131.4
(22) Date of filing: 25.01.2021
(51) Int. Cl.: H02J 7/00

(54) **SMART BATTERY DEVICE AND OPERATING METHOD THEREOF**
INTELLIGENTE BATTERIEVORRICHTUNG UND VERFAHREN ZU DEREN BETRIEB
DISPOSITIF DE BATTERIE INTELLIGENT ET SON PROCÉDÉ DE FONCTIONNEMENT

(30) Priority: 18.09.2020 TW 109132210
(43) Date of publication of application: 23.03.2022
(73) Proprietor: Quanta Computer Inc., Taoyuan City 333 (TW)
(72) Inventor: YEN, Wei-Ting, 333 Taoyuan City (TW)
(74) Representative: Michalski Hüttermann & Partner Patentanwälte mbB

(56) References cited:
- WO-A1-2009/042650
- US-A1- 2003 193 318
- US-A1- 2010 194 348
- US-A1- 2012 326 502

## Description

### BACKGROUND OF THE INVENTION

### Field of the Invention

The present disclosure relates to a battery device and operating method thereof, and, in particular, to a battery device with smart fast/normal charge switching and leakage prevention functions and operating method thereof.

### Description of the Related Art

Battery devices are indispensable in current portable electronic devices, such as smartphones, tablets, and laptops. Many battery devices are advertised as having a fast-charge function, which can charge the battery device to more than 80% in 30 to 60 minutes. However, some users do not require or want a fast-charge function. For example, some users consecutively connect adaptors to their electronic devices when they are using them. In addition, some users are accustomed to charging their electronic devices during sleep hours. In these cases, the fast-charge function is not necessary, and the fast-charge function may cause problems such as shortening the battery life and wasting battery capacity.

In addition, current electronic devices are continuously pursuing batteries having a larger capacity, to increase the stand-by time and usage time. However, leakage may occur in electronic devices due to poor design, aging, or failure of component parts. If there is any leakage on the system side of an electronic device, the electric quantity of battery (e.g. voltage level of battery) will still be gradually consumed, thereby reducing the usage time of the electronic device and wasting the increased capacity of the battery device.

WO 2009/042650 A1 describes a battery disconnect device for a motor vehicle and the like includes a housing with a monitor circuit and a sealed relay. The monitoring circuit senses various conditions, such as current drawn from the battery, drop in the battery voltage, engine starting, engine running, and the like and in response operates the relay to insure that the battery does not get damaged or depleted.

Therefore, there is a need for a battery device and an operating method to provide a smart fast/normal charge switching to adjust the charge mode, while detecting leakage and preventing the battery device from consuming electric quantity due to system leakage.

### BRIEF SUMMARY OF THE INVENTION

The invention is defined by the features of the independent claims.

The embodiments of the present disclosure provide a smart battery device, which is applied to an electronic device and which provides power for the electronic device. The smart battery device comprises: a battery pack, a sensing resistor, and a main management chip. The sensing resistor is configured to sense the charging and discharging of the smart battery device. The main management chip is connected to the battery pack, the sensing resistor, and the electronic device. The main management chip is configured to manage the charging and discharging of the smart battery device. When the electronic device is not turned on, if the main management chip detects a leakage event in the electronic device through the sensing resistor, the main management chip will enable the smart battery device to enter a temporary failure state to make the smart battery device stop discharging.

The embodiments of the present disclosure provide an operating method for a smart battery device, the operating method is applied to an electronic device including the smart battery device. The smart battery device comprises a battery pack, a sensing resistor, and a main management chip. The operating method comprises: detecting whether or not the electronic device has a leakage event via the sensing resistor; and when the electronic device has a leakage event, enabling the smart battery device to enter a temporary failure state via the main management chip, the temporary failure makes the smart battery device stop charging and discharging.

The embodiments of the present disclosure provide an operating method for a smart battery device. The operating method is applied to an electronic device including the smart battery device. The smart battery device comprises a battery pack, a sensing resistor, a main management chip. An adaptor is configured to provide an external power supply for the electronic device and to charge the smart battery device. The operating method comprises the following steps. When the adaptor is connected to the electronic device, recording a continuously-inserted time via the main management chip. When the continuously-inserted time is longer than a first time period, setting the smart battery device to a normal charge mode via the main management chip.

### BRIEF DESCRIPTION OF THE DRAWINGS

The present disclosure is best understood from the following detailed description when read with the accompanying figures. It is emphasized that, in accordance with the standard practice in the industry, various features are not drawn to scale and are used for illustration purposes only. In fact, the dimensions of the various features may be arbitrarily increased or reduced for clarity of discussion. It is also emphasized that the drawings appended illustrate only typical embodiments of this disclosure and are therefore not to be considered limiting in scope, for the disclosure may apply equally well to other embodiments.
FIG. 1 shows a block diagram of an electronic device, in accordance with some embodiments of the present disclosure.
FIG. 2 shows a block diagram of an battery device, in accordance with some embodiments of the present disclosure.
FIG. 3 shows a flowchart of a method for preventing leakage, which comprises part of the features of the invention.
FIG. 4 shows a flowchart of a method for smart fast/normal charge switching, which comprises part of the features of the invention.

### DETAILED DESCRIPTION OF THE INVENTION

The following disclosure provides many different embodiments, or examples, for implementing different features of the provided subject matter. Specific examples of components and arrangements are described below to simplify the present disclosure. These are, of course, merely examples and are not intended to be limiting. In addition, the present disclosure may repeat reference numerals and/or letters in the various examples. This repetition is for the purpose of simplicity and clarity and does not in itself dictate a relationship between the various embodiments and/or configurations discussed. Further, spatially relative terms, such as "beneath," "below," "lower," "above," "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

Still further, unless specifically disclaimed, the singular includes the plural and vice versa. And when a number or a range of numbers is described with "about," "approximate," and the like, the term is intended to encompass numbers that are within a reasonable range including the number described, such as within +/- 10% of the number described or other values as understood by person skilled in the art. In addition, the present disclosure is not limited by the illustrated ordering of acts or events, as some acts may occur in different orders and/or concurrently with other acts or events. Furthermore, not all illustrated acts or events are required to implement a methodology in accordance with the present disclosure.

The present disclosure provides a battery device and a smart fast/normal charge switching method complementing the battery device. According to the user's usage habit, the smart fast/normal charge switching method can switch the battery device from the fast charge mode to the normal mode (also called slow charge mode) to increase the service life of the battery device. The present disclosure further provides a leakage prevention method, the leakage prevention method may be applied to the same battery device. The leakage prevention method can detect the leakage event of the electronic device and prevent the electric quantity of the battery device from consuming due to the leakage event, thereby maintain sufficient electric quantity at critical moments.

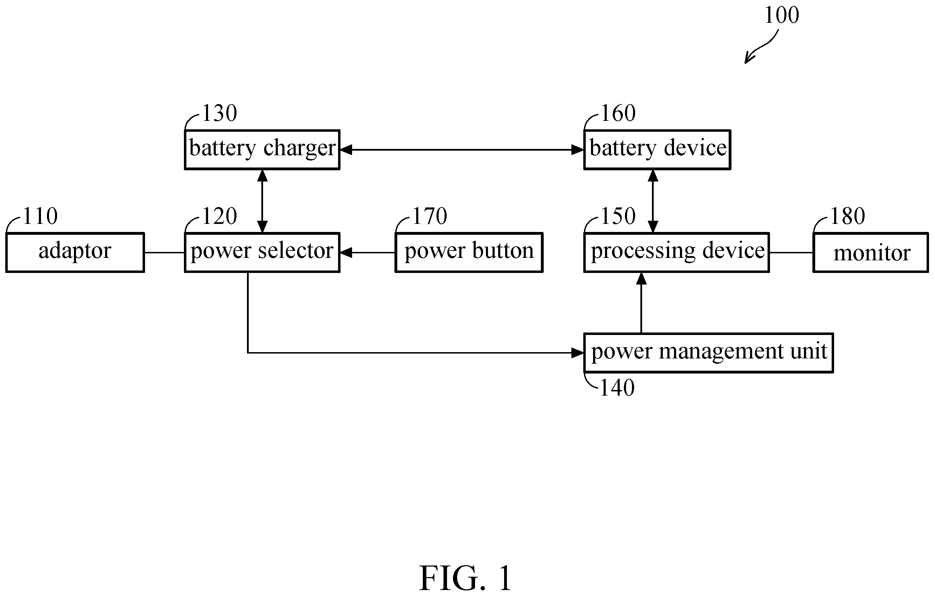

FIG. 1 shows a block diagram of an electronic device 100, in accordance with some embodiments of the present disclosure. The electronic device 100 includes an adaptor 110, a power selector 120, a battery charger 130, a power management unit 140, a processing device 150, a battery device 160, and a power button 170. The electronic device 100 may be a smart phone, a tablet, or a laptop, but the present disclosure is not limited thereto.

When the power adaptor 110 is inserted into the electronic device 100, external power from an external power supply (such as a general socket or a power bank) is provided to the power selector 120. The power selector 120 provides external power to the battery charger 130 and the power management unit 140. The battery charger 130 uses the power from the power selector 120 to charge the battery device 160. The power management unit 140 manages the power supplied to the processing device 150. For example, when the electronic device 100 is connected to the external power source (e.g. via the power adaptor 110), the power management unit 140 provides the power from the external power supply to the processing device 150. When the power adaptor 110 is not inserted into the electronic device 100 and the electronic device 100 is not connected to an external power supply, the power management unit 140 provides the power from the battery device 160 to the processing device 150.

The power button 170 is connected to the power selector 120 and is configured to provide activating and/or other instructions for the electronic device 100. In some examples, the electronic device 100 includes a monitor 180 connected to the processing device 150, wherein the monitor 180 may have a touch function. In some embodiments, the electronic device 100 further comprises a shortcut key (not shown), and the shortcut key is used to allow the user to send instructions to the electronic device 100. The shortcut key may be a single physical button, a combination of buttons, a gesture for touch screen, options in an application program, and a like, but the present disclosure is not limited thereto.

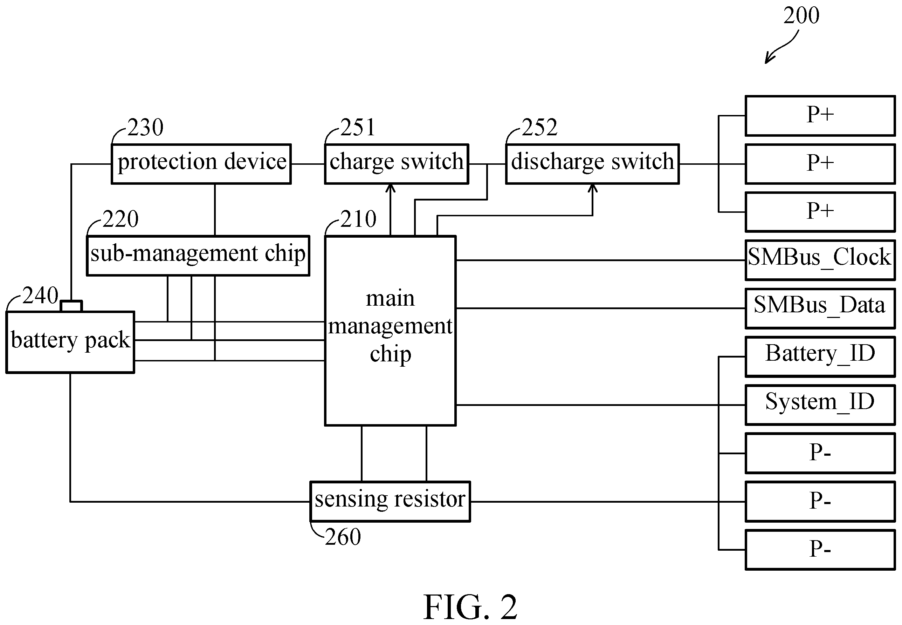

FIG. 2 shows a block diagram of a battery device 200, in accordance with some embodiments of the present disclosure. The battery device 200 may be battery device 160 of FIG. 1. The battery device 200 comprises a main management chip 210, a sub-management chip 220, a protection device 230, a battery pack 240, a charge switch 251, a discharge switch 252, and a sensing resistor 260. The main management chip 210 can detect various states of entire battery device 200, such as charge/discharge current, electric quantity, temperature, battery internal resistance, and alike. The main management chip 210 controls the charge/discharge of the battery pack 240. For example, the main management chip 210 may control the charge and discharge of the battery pack 240 via the charge switch 251 and the discharge switch 252, wherein the charge switch 251 and the discharge switch 252 are coupled between the battery pack 240 and positive pole P+ of the battery device 200. The main management chip 210 may be an integrated circuit (IC) device, such as processor, microprocessor, controller, memory, other suitable IC, or combination thereof. In some embodiments, the main management chip 210 is a Gas Gauge IC.

The sensing resistor 260 is coupled to the main management chip 210, battery pack 240, and negative pole P- of the battery device 200. The main management chip 210 detects the charge/discharge current of the battery device 200 by the sensing resistor 260. When the battery device 200 is coupled to an electronic device (e.g. electronic device 100), the main management chip 210 detects the discharge current from battery device 200 to the electronic device by the sensing resistor 260. The sensing resistor 260 is used to detect the leakage of the electronic device (e.g. electronic device 100) coupled with the battery device 200. When the electronic device is not turned on, if the sensing resistor 260 detects the discharge current to the electronic device, it means that a leakage event has occurred.

The protection device 230 (e.g. fuse) is coupled between the battery pack 240 and the charge switch 251 (or the discharge switch 252), and the sub-management chip 220 is coupled to the main management chip 210, protection device 230, and the battery pack 240. The sub-management chip 220 and the protection device 230 act as a secondary protection of the battery device 200. For example, when the main management chip 210 is failure or detects that the charge switch 251 and/or discharge switch 252 are failure and thus the charge/discharge of the battery pack 240 cannot be controlled, the sub-management chip 220 switches the protection device 230 to a disconnected state to ensure that the battery pack 240 stops charging and discharging. The sub-management chip 220 may be an integrated circuit device, such as processor, microprocessor, controller, memory, other suitable IC, or combination thereof.

In some embodiments of the present disclosure, the battery device 200 further comprises a plurality of pins, such as a clock pin SMBus_Clock, a data pin SMBus_Data, an identification pin Battery _ID, and an identification pin System_ID. The battery device 200 may communicate with the connected electronic device (e.g. electronic device 100) via the clock pin SMBus_Clock and the data pin SMBus_Data. The identification pin Battery_ID may enable the electronic device (e.g. electronic device 100) to identify the battery device 200, and the identification pin System_ID may enable the battery device 200 to identify the electronic device. For example, when the battery device 200 is connected to the electronic device 100, it can be determined whether the battery device 200 has been inserted into the electronic device 100 via the identification pin Battery _ID and the identification pin System_ID.

The battery state data is stored in the main management chip 210 of the battery device 200. Based on the battery state data, the main management chip 210 performs the fast/normal charge switching method and the leakage prevention method provided by the present disclosure. The addresses of the battery states data are shown in Table 1 and Table 2 below, wherein Table 1 represents bits 0~7, and Table 2 represents bits 8-15.

**Table 1**

| bit | 7 | 6 | 5 | 4 | 3 | 2 | 1 | 0 | Battery state |
|---|---|---|---|---|---|---|---|---|---|
| | 1 | X | X | X | X | X | X | X | Battery in |
| | 0 | X | X | X | X | X | X | X | Battery out |
| | 1 | X | X | X | 1 | X | X | X | Battery charge |
| | 1 | X | X | X | 0 | X | X | X | Battery discharge |

**Table 2**

| bit | 15 | 14 | 13 | 12 | 11 | 10 | 9 | 8 | Battery state |
|---|---|---|---|---|---|---|---|---|---|
| | 0 | 0 | 0 | 0 | 0 | 0 | 0 | 1 | Normal charge |
| | 1 | 0 | 0 | 0 | 0 | 0 | 1 | 0 | Fast charge |
| | X | X | X | X | 1 | 0 | 1 | 0 | Temporary failure |
| | X | X | X | X | 1 | 0 | 0 | 1 | Permanent failure |

When bit 3 is "1", it means that the battery device 200 is charging (the adaptor 110 is connected to (inserted into) the electronic device 100), and when bit 3 is "0", it means that the battery device 200 is discharging (the adaptor 110 is not connected to the electronic device 100). When bit 7 is "1", it means that the battery device 200 has entered (been inserted into) the electronic device 100, and when bit 7 is "0", it means that the battery device 200 has left from the electronic device 100 (been removed from the electronic device 100). When both bit 9 and bit 15 are "1", it means that the battery device 200 is in the fast charge mode.

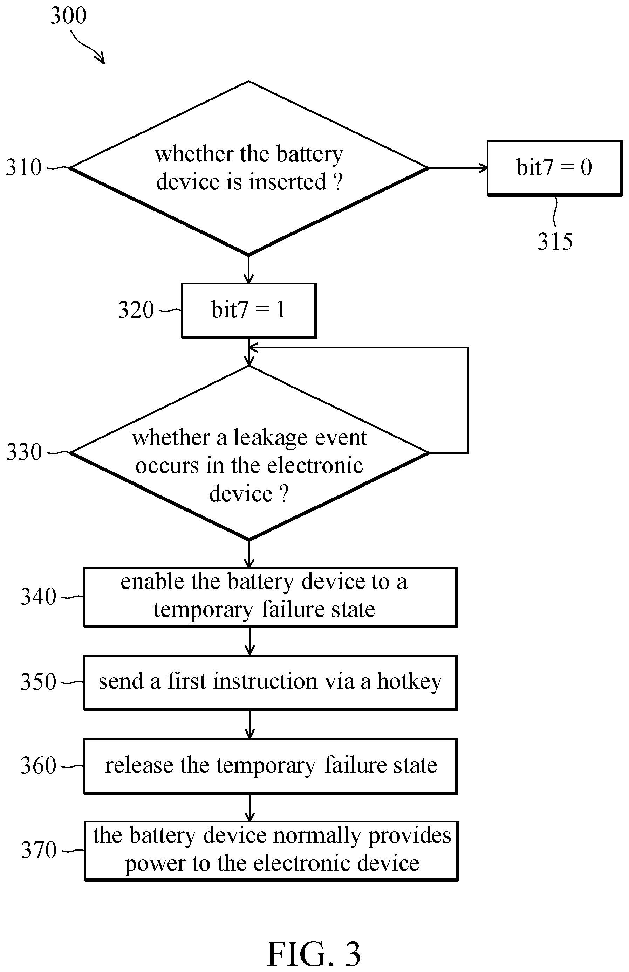

FIG. 3 shows a flowchart of method 300 for leakage prevention, which comprises part of the features of the invention. The method 300 can be applied to an electronic device that is not turned on (booted). In operation 310, the method 300 detects that whether the battery device 200 has been connected to the electronic device 100. For example, detecting whether the battery device 200 has been inserted into the electronic device 100 via the identification pin Battery _ID and the identification pin System _ID. When it is detected that the battery device 200 is not inserted into the electronic device 100, the method 300 proceeds to operation 315. In operation 315, the main management chip 210 sets bit 7 to "0". When it is detected that the battery device 200 has been connected to the electronic device 100, the method 300 proceeds to operation 320. In operation 320, the main management chip 210 sets bit 7 to "1".

In operation 330, the method 300 detects whether a leakage event occurs in the electronic device 100. For example, the main management chip 210 may detect whether a leakage event occurs in the electronic device 100 that is no turned on by using the sensing resistor 260. When a leakage event is detected, the method 300 proceeds to operation 340. If there is no leakage event been detected, the method 300 remains in operation 330 and keeps detecting whether a leakage event occurs in the electronic device.

In operation 340, the main management chip 210 enables the battery device 200 to a temporary failure state, the temporary failure state prohibits the battery device 200 from providing power to the electronic device 100. As a result, it can prevent the electric quantity stored in the battery device 200 from being consumed due to a leakage event of the electronic device 100. In some embodiments, the main management chip 210 enables the battery device 200 to enter the temporary failure state by setting the battery state data to "BA80 (represented in hexadecimal)". Wherein "A" represents that bit 11 to bit 8 are "1010", it means that the battery state is temporary failure, as shown in Table 2. Furthermore, "80" represents that bit 7 is "1" and bit 3 is "0", it respectively means that the battery state is "Battery in" and "Battery discharge" (i.e. the adaptor is not connected to the electronic device), as shown in Table 1.

When a user wants to turn on the electronic device 100, the user can use a hotkey send an instruction to make the battery device 200 and the electronic device 100 operate normally. In some embodiments, the hotkey may be the power button of the electronic device 100, such as power button 170. In other embodiments, the hotkey may be a shortcut key (not shown) disposed additionally and different to the power button. In operation 350, the user can send a first instruction to the main management chip 210 via the hotkey, it makes the method 300 proceed to operation 360.

In operation 360, the main management chip 210 varies the battery state of the battery device 200 according to the first instruction. In some embodiments, the main management chip 210 sets the battery state to "0188 (represented in hexadecimal)", and then sets the battery state to "4180 (represented in hexadecimal)" immediately. As shown in Table 1 and Table 2, "0188" means that the state of the battery device 200 is the normal mode (normal charge mode), battery in (the battery device is inserted into electronic device), and battery charge (adaptor is inserted). It should be noted that, at this time, the adaptor is not actually inserted into the electronic device 100. The "0188" is only a transitional state, it is used to make the main management chip 210 think that the present state is normal and no leakage event has occurred. After "0188", the main management chip 210 sets the battery state to "4180" immediately.

As shown in Table 1 and Table 2, "4180" means that the state of the battery device 200 is normal mode, battery in, and battery discharge (adaptor is not inserted). In this time, bit 11 to bit 8 are "0001", the temporary failure state is released, and the method 300 proceeds to operation 370. In operation 370, since the temporary failure state is released, both the battery device 200 and the electronic device 100 operate normally, and the battery device 200 normally provides power to the electronic device 100.

As described above, in operation 350, the electronic device 100 is turned on at the same time that the hotkey sends the first instruction. Since the electric quantity consumed by the electronic device 100 after turning on is much greater than that the power consumed by the leakage, the leakage event can be ignored after the electronic device 100 is turned on. As a result, the battery device 200 can discharge normally without being limited to the leakage event.

The leakage prevention method provided by the method 300 can prevent the battery within the electronic device that is not turned on from continuously discharging due to a leakage event, and prevent the stored electric quantity being consumed. As a result, the actual operating time of the electronic device can be increased, the lifetime of the battery device can be increased, and the aging of the electronic device components can be retarded. It should be noted that the codes in Table 1, Table 2, and various embodiments are only examples, and those skilled in the art can easily change them, and these changes are encompassed by the scope of the present disclosure.

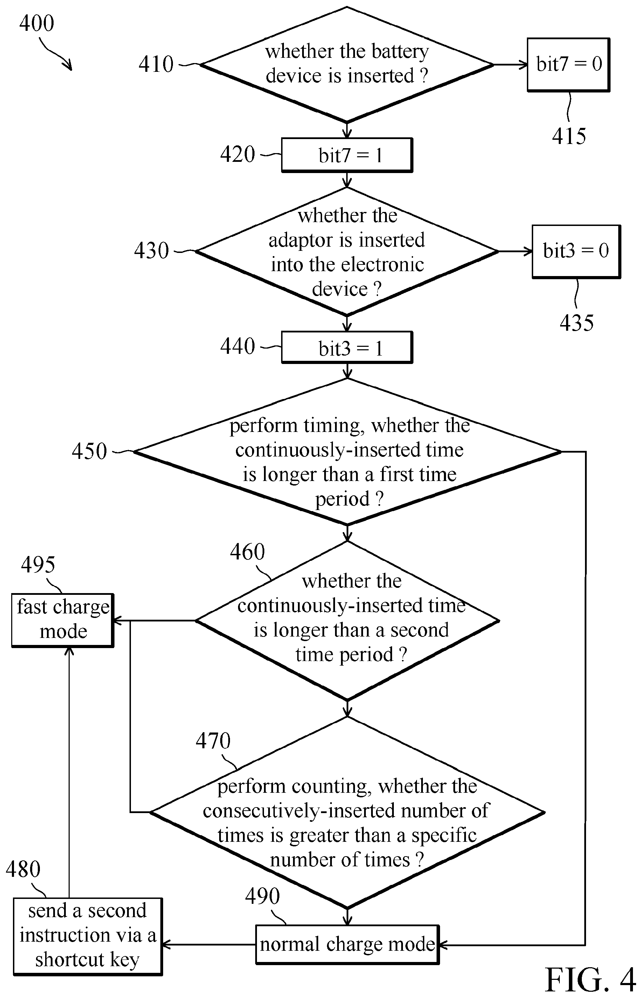

FIG. 4 shows a flowchart of method 400 for smart fast/normal charge switching, which comprises part of the features of the invention. In operation 410, the method 400 detects that whether the battery device 200 has been connected to the electronic device 100. For example, detecting whether the battery device 200 has been inserted into the electronic device 100 via the identification pin Battery_ID and the identification pin System_ID. When it is detected that the battery device 200 is not inserted into the electronic device 100, the method 400 proceeds to operation 415. In operation 415, the main management chip 210 sets bit 7 to "0". When it is detected that the battery device 200 has been connected to the electronic device 100, the method 400 proceeds to operation 420. In operation 420, the main management chip 210 sets bit 7 to "1".

After operation 420, the method 400 proceeds to operation 430. In operation 430, the method 400 detects whether the adaptor is inserted into the electronic device. For example, detecting whether the adaptor 110 is inserted into the electronic device 100. When the adaptor 110 is not detected, the method 400 proceeds to operation 435. In operation 435, the main management chip 210 sets bit 3 to "0". When it is detected that the adaptor 110 has been connected to the electronic device 100. the method 400 proceeds to operation 440. In operation 440, the main management chip 210 sets bit 3 to "1".

After detecting that the adaptor 110 is inserted (operation 440), the method 400 proceeds to operation 450. In operation 450, the method 400 performs timing to record a continuously-inserted time that how long the adaptor 110 is continuously inserted into the electronic device 100, and record whether the continuously-inserted time is longer than a first time period. For example, the main management chip 210 performs timing with a timer (not shown). In some embodiments, the first time period is 168 hours. However, the present disclosure is not limited thereto, the users and/or manufacturers can set the first time period to any suitable time to meet their requirements.

The recorded continuously-inserted time that the adaptor 110 is continuously inserted into the electronic device 100 represents the time period that the battery device can be charged. Therefore, the longer the continuously-inserted time, the more sufficient time the battery device 200 can be charged, and the less the demand for the fast-charge function. Therefore, the present disclosure makes the judgment by setting the first time period. When the continuously-inserted time is longer than the first time period, it means that the user will connect the adaptor to the electronic device for a long time, and thus the fast-charge function is not needed.

When the continuously-inserted time that the adaptor 110 is continuously inserted into the electronic device 100 is longer than the first time period, the method 400 switches the battery device 200 from fast charge mode to normal charge mode. In some embodiments, the main management chip 210 sets bit 15 and bit 9 to "0" and sets bit 8 to "1" to switch the battery device 200 from fast charge mode to the normal charge mode. In FIG. 4, the normal charge mode is shown as operation 490.

In some embodiments, when the continuously-inserted time that the adaptor 110 is continuously inserted into the electronic device 100 is shorter than the first time period, the method 400 proceeds to operation 460. In operation 460, the method 400 determines whether the continuously-inserted time that the adaptor 110 is continuously inserted into the electronic device 100 is longer than a second time period. When the continuously-inserted time that the adaptor 110 is continuously inserted into the electronic device 100 is longer than the second time period, the method 400 proceeds to operation 470.

In operation 470, the method 400 performs counting to record a consecutively-inserted number of times that how many times the adaptor 110 is consecutively inserted into the electronic device 100, and record whether the consecutively-inserted number of times is greater than a specific number of times. It should be noted that, each time of the consecutively-inserted number of times means that the adaptor 110 has been inserted into and removed from the electronic device 100 once, and the continuously-inserted time of each time of the consecutively-inserted number of times is shorter than the first time period but longer than the second time period. For example, assuming that the adaptor has been inserted into and removed from the electronic device four times, called first insertion, second insertion, third insertion, and fourth insertion, wherein the first insertion lasted for a first period, the second insertion lasted for a second period, the third insertion lasted for a third period, and the fourth insertion lasted for a fourth period. If the first period, the second period, the third period, and the fourth period are shorter than the first time period but longer than the second time period, the consecutively-inserted number of times is four. If the first period, the second period, and the third period are shorter than the first time period and longer than the second time period but the fourth period is shorter than the second time period, the consecutively-inserted number of times is three. If the first period, the second period, and the fourth period are shorter than the first time period and longer than the second time period but the third period is shorter than the second time period, the consecutively-inserted number of times is two, and the counting and the recording of the consecutively-inserted number of times will restart at the fourth insertion. For example, the main management chip 210 performs counting with a counter (not shown). In some embodiments, the second time period is 3 hours, and the specific number of times is 10 times. However, the present disclosure is not limited thereto, the users and/or manufacturers can set the second time period to any suitable time and set the specific number of times to any suitable number of times to meet their requirements.

Although the continuously-inserted time of the adaptor is not very long, if the continuously-inserted time of each insertion of the adaptor can maintain a sufficient charging time for the battery device, it means that the demand for the fast-charge function is low. Therefore, the present disclosure makes the judgment by setting the second time period and the specific number of times. When the continuously-inserted time is longer than the second time period and the consecutively-inserted number of times is greater than the specific number of times, it means that the user will provide sufficient charging time for the battery device when using the adaptor, and thus the fast-charge function is not needed.

When the continuously-inserted time that the adaptor 110 is continuously inserted into the electronic device 100 is shorter than the first time period but longer than the second time period and the consecutively-inserted number of times is greater than the specific number of times, the method 400 switches the battery device 200 from the fast charge mode to the normal charge mode (operation 490). In some embodiments, the main management chip 210 sets bit 15 and bit 9 to "0" and sets bit 8 to "1" to switch the battery device 200 from fast charge mode to the normal charge mode.

When the continuously-inserted time that the adaptor 110 is continuously inserted into the electronic device 100 is shorter than the second time period or the consecutively-inserted number of times is less than the specific number of times, the battery device remains in fast charge mode. In FIG. 4, the fast charge mode is shown as operation 495.

In some embodiments, after the battery device 200 is switched to the normal charge mode, it can still be switched to the fast charge mode. In operation 480, the user can send a second instruction to the main management chip 210 via a shortcut key to switch the battery device 200 to the fast charge mode. The shortcut key may be a single physical button, a combination of buttons, a gesture for touch screen, options in an application program, and a like, but the present disclosure is not limited thereto. In some embodiments, the main management chip 210 sets bit 15 and bit 9 to "1" and sets bit 8 to "0" to switch the battery device 200 from the normal charge mode to the fast charge mode (operation 495).

In some embodiments, the electronic device 100 further stores an application program, the application program can display that the battery device 200 is currently in the normal charge mode or the fast charge mode via the monitor 180.

The smart fast/normal charge switching method provided by the method 400 can switch between the fast charge mode and the normal charge mode responding to habits of the users. As a result, it can be avoided that the unnecessary fast-charge function shortens the lifetime of the battery device. It should be noted that the codes in Table 1, Table 2, and various embodiments are only examples, and those skilled in the art can easily change them, and these changes are encompassed by the scope of the present disclosure.

In some embodiments, the method 300 and the method 400 can be performed simultaneously by the same device (e.g. the electronic device 100 and the battery device 200). For example, operation 430 to operation 495 of the method 400 may be performed after operation 370 of the method 300. Alternatively, operation 330 to operation 370 of the method 300 may be performed between operation 420 and operation 430 of the method 400.

In some embodiments, the electronic device (e.g. the electronic device 100) may be a computer device running a Windows operating system. In these embodiments, the battery device (e.g. the battery device 200) can perform internal operations according to the battery state data (e.g. Table 1 and Table 2). For example, the battery device 200 can detect whether the battery device 200 is inserted into the electronic device 100, detect whether the adaptor 110 is inserted into the electronic device 100, enable the battery device 200 to enter a temporary failure state to prevent leakage, and/or switch the battery device 200 to the normal charge state according to the result of the timing and the counting.

In these embodiments, the electronic device 100 may comprise an embedded controller, the embedded controller can be disposed in the main management chip 210. The embedded controller can convert instruction (e.g. the first instruction and the second instruction) from the hotkey and/or shortcut key into hexadecimal codes.

The embedded controller can send information that comes from the battery device 200 and/or the hotkey (and the shortcut key) to the advanced configuration and power interface (ACPI) of the basic input output system (BIOS) to control the charge and discharge of the battery device 200 via the ACPI.

The ACPI can transmit information about the battery device 200 to an application program in the operating system via the Windows Management Instrumentation (WMI) of the operating system. The application program can display various information of the battery device 200 via a monitor (e.g. the monitor 180), such as battery state data, electric quantity, fast charge or normal charge mode, temperature, and a like. In some embodiments, the user can switch between the fast/normal charge modes through the application program.

The present disclosure provides a battery device, the battery device can perform a smart fast/normal charge switching method and a leakage prevention method, or perform both of them simultaneously. The smart fast/normal charge switching method can switch the charge mode between the fast charge mode and the normal charge mode responding to the habit of the user. As a result, the deterioration of the battery device caused by the unnecessary fast-charge function can be avoided, and thus the lifetime of the battery device can be increased. The leakage prevention method can detect the leakage of the electronic device that is not turned on, and prevent the battery device from reducing the stored electric quantity due to continuous discharging caused by the leakage event. As a result, the actual operating time of the electronic device can be increased, the lifetime of the battery device can be increased, and the aging of the electronic device components can be retarded.

The foregoing has outlined features of several embodiments so that those skilled in the art may better understand the detailed description that follows. The scope of protection is solely defined by the appended claims.

## Claims

1. A smart battery device, configured to be applied to an electronic device (100) and to provide power for the electronic device (100), the smart battery device comprising:
a battery pack (240);
a sensing resistor (260), configured to sense the charging and discharging of the smart battery device; and
a main management chip (210), connected to the battery pack (240), the sensing resistor (260), and connectable to the electronic device (100), the main management chip (210) being configured to manage the charging and discharging of the smart battery device; wherein
the main management chip (210) is configured to enable the smart battery device to enter a temporary failure state to make the smart battery device stop discharging, in response to that the main management chip (210) detects a leakage event in the electronic device (100) through the sensing resistor (260), when the electronic device (100) is not turned on; wherein
when an adaptor (110) configured to provide an external power supply is connected to the smart battery device, the main management chip (210) is configured to record a continuously-inserted time of the adaptor (110); and wherein
when the continuously-inserted time is longer than a first time period, the main management chip (210) is configured to set the smart battery device to a normal charge mode.

2. The smart battery device as claimed in the previous claim, wherein when the main management chip (210) receives a first instruction, the first instruction is configured to enable the main management chip (210) to release the temporary failure state, so that the smart battery device may discharge normally.

3. The smart battery device as claimed in the previous claims, wherein the first time period is 168 hours.

4. The smart battery device as claimed in any of the previous claims, wherein:
whwn the continuously-inserted time is shorter than the first time period but longer than a second time period, the main management chip (210) is configured to record a consecutively-inserted number of times, wherein the second time period is shorter than the first time period; and
when the consecutively-inserted number of times is greater than or equal to a specific number of times, the main management chip (210) is configured to set the smart battery device to the normal charge mode.

5. The smart battery device as claimed in the previous claim, wherein the second time period is 3 hours, and the specific number of times is 10 times.

6. The smart battery device as claimed in any of the previous claims, further comprising a shortcut key, wherein when the shortcut key is used, the shortcut key is configured to output a second instruction to the main management chip (210), wherein the second instruction is configured to enable the main management chip (210) to set the smart battery device to a fast charge mode.

7. The smart battery device as claimed in any of the previous claims, further comprising a monitor (180), configured to display whether the smart battery device is in a fast charge mode or a normal charge mode.

8. An operating method for a smart battery device, wherein the operating method is applied to an electronic device (100) including the smart battery device, the smart battery device comprises a battery pack (240), a sensing resistor (260), and a main management chip (210), wherein an adaptor (110) is configured to provide an external power supply for the electronic device (100) and to charge the smart battery device, the operating method comprising:
detecting whether the electronic device (100) has a leakage event via the sensing resistor (260);
when the electronic device (100) has a leakage event, enabling the smart battery device to enter a temporary failure state via the main management chip (210), and the temporary failure makes the smart battery device stop charging and discharging;
when the adaptor (110) is connected to the electronic device, recording a continuously-inserted time of the adaptor (110) via the main management chip (210); and
when the continuously-inserted time is longer than a first time period, setting the smart battery device to a normal charge mode via the main management chip (210).

9. The operating method as claimed in the previous claim, further comprising sending a first instruction to the main management chip (210) via a hotkey, wherein the first instruction enables the main management chip (210) to release the temporary failure state to allow the smart battery device to discharge normally.

10. The operating method as claimed in the previous claims, further comprising:
recording a consecutively-inserted number of times via the main management chip (210); and
when the continuously-inserted time is shorter than the first time period but longer than a second time period and the consecutively-inserted number of times is greater than or equal to a specific number of times, setting the smart battery device to the normal charge mode via the main management chip (210), wherein the second time period is shorter than the first time period.

11. The operating method as claimed in any of the previous claims, further comprising sending a second instruction to the main management chip (210) via a shortcut key, wherein the second instruction enables the main management chip (210) to set the smart battery device to a fast charge mode.

## Patentansprüche

1. Intelligente Batterievorrichtung, die dafür konfiguriert ist, auf eine elektronische Vorrichtung (100) angewendet zu werden und die elektronische Vorrichtung (100) mit Strom zu versorgen, wobei die intelligente Batterievorrichtung aufweist:
ein Batteriepack (240);
einen Erfassungswiderstand (260), der dafür konfiguriert ist, einen Lade- und Entladevorgang der intelligenten Batterievorrichtung zu erfassen; und
einen Hauptmanagementchip (210), der mit dem Batteriepack (240) und dem Erfassungswiderstand (260) verbunden ist und mit der elektronischen Vorrichtung (100) verbindbar ist, wobei der Hauptmanagementchip (210) dafür konfiguriert ist, den Lade- und Entladevorgang der intelligenten Batterievorrichtung zu managen,
wobei der Hauptmanagementchip (210) dafür konfiguriert ist, zu ermöglichen, dass die intelligente Batterievorrichtung in einen vorübergehenden Fehlerzustand eintritt, um in Antwort darauf, dass der Hauptmanagementchip (210) über den Erfassungswiderstand (260) ein Leckageereignis in der elektronischen Vorrichtung (100) erfasst, wenn die elektronische Vorrichtung (100) nicht eingeschaltet ist, zu veranlassen, dass die intelligente Batterievorrichtung den Entladevorgang stoppt, wobei,
wenn ein Adapter (110), der dafür konfiguriert ist, eine externe Stromversorgung bereitzustellen, mit der intelligenten Batterievorrichtung verbunden ist, der Hauptmanagementchip (210) dafür konfiguriert ist, eine kontinuierliche Einsteckzeit des Adapters (110) aufzuzeichnen, und wobei,
wenn die kontinuierliche Einsteckzeit länger als eine erste Zeitdauer ist, der Hauptmanagementchip (210) dafür konfiguriert ist, die intelligente Batterievorrichtung in einen normalen Lademodus zu versetzen.

2. Intelligente Batterievorrichtung nach dem vorhergehenden Anspruch, wobei, wenn der Hauptmanagementchip (210) einen ersten Befehl empfängt, der erste Befehl dafür konfiguriert ist, zu ermöglichen, dass der Hauptmanagementchip (210) den vorübergehenden Fehlerzustand aufhebt, so dass die intelligente Batterievorrichtung normal entladen werden kann.

3. Intelligente Batterievorrichtung nach den vorhergehenden Ansprüchen, wobei die erste Zeitdauer 168 Stunden beträgt.

4. Intelligente Batterievorrichtung nach einem der vorhergehenden Ansprüche, wobei:
wenn die kontinuierliche Einsteckzeit kürzer als die erste Zeitdauer, aber länger als eine zweite Zeitdauer ist, der Hauptmanagementchip (210) dafür konfiguriert ist, eine Anzahl aufeinanderfolgender Einsteckvorgänge aufzuzeichnen, wobei die zweite Zeitdauer kürzer ist als die erste Zeitdauer, und
wenn die Anzahl der aufeinanderfolgenden Einsteckvorgänge größer oder gleich einer spezifischen Anzahl ist, der Hauptmanagementchip (210) dafür konfiguriert ist, die intelligente Batterievorrichtung in den normalen Lademodus zu versetzen.

5. Intelligente Batterievorrichtung nach dem vorhergehenden Anspruch, wobei die zweite Zeitdauer 3 Stunden beträgt und die spezifische Anzahl 10 Mal beträgt.

6. Intelligente Batterievorrichtung nach einem der vorhergehenden Ansprüche, ferner aufweisend ein Tastaturkürzel, wobei, wenn das Tastaturkürzel betätigt wird, das Tastaturkürzel dafür konfiguriert ist, einen zweiten Befehl an den Hauptmanagementchip (210) auszugeben, wobei der zweite Befehl dafür konfiguriert ist, zu ermöglichen, dass der Hauptmanagementchip (210) die intelligente Batterievorrichtung in einen Schnelllademodus versetzt.

7. Intelligente Batterievorrichtung nach einem der vorhergehenden Ansprüche, ferner aufweisend einen Monitor (180), der dafür konfiguriert ist, anzuzeigen, ob sich die intelligente Batterievorrichtung in einem Schnelllademodus oder in einem normalen Lademodus befindet.

8. Betriebsverfahren für eine intelligente Batterievorrichtung, wobei das Betriebsverfahren auf eine elektronische Vorrichtung (100) angewendet wird, die die intelligente Batterievorrichtung aufweist, wobei die intelligente Batterievorrichtung ein Batteriepack (240), einen Erfassungswiderstand (260) und einen Hauptmanagementchip (210) aufweist, wobei ein Adapter (110) dafür konfiguriert ist, eine externe Stromversorgung für die elektronische Vorrichtung (100) bereitzustellen und die intelligente Batterievorrichtung zu laden, wobei das Betriebsverfahren aufweist:
Erfassen, ob in der elektronischen Vorrichtung (100) ein Leckageereignis aufgetreten ist, über den Erfassungswiderstand (260);
wenn in der elektronischen Vorrichtung (100) ein Leckageereignis aufgetreten ist, Ermöglichen, dass die intelligente Batterievorrichtung über den Hauptmanagementchip (210) in einen vorübergehenden Fehlerzustand eintritt, wobei der vorübergehende Fehler veranlasst, dass die intelligente Batterievorrichtung den Lade- und Entladevorgang stoppt;
wenn der Adapter (110) mit der elektronischen Vorrichtung verbunden ist, Aufzeichnen einer kontinuierlichen Einsteckzeit des Adapters (110) über den Hauptmanagementchip (210); und
wenn die kontinuierliche Einsteckzeit länger als eine erste Zeitdauer ist, Versetzen der intelligenten Batterievorrichtung in einen normalen Lademodus über den Hauptmanagementchip (210).

9. Betriebsverfahren nach dem vorhergehenden Anspruch, ferner aufweisend Übertragen eines ersten Befehls an den Hauptmanagementchip (210) über einen Hotkey, wobei der erste Befehl ermöglicht, dass der Hauptmanagementchip (210) den vorübergehenden Fehlerzustand aufheben kann, um zu ermöglichen, dass die intelligente Batterievorrichtung normal entladen werden kann.

10. Betriebsverfahren nach den vorhergehenden Ansprüchen, ferner aufweisend:
Aufzeichnen einer Anzahl aufeinanderfolgender Einsteckvorgänge über den Hauptmanagementchip (210); und
wenn die kontinuierliche Einsteckzeit kürzer als die erste Zeitdauer, aber länger als eine zweite Zeitdauer ist und die Anzahl aufeinanderfolgender Einsteckvorgänge größer oder gleich einer spezifischen Anzahl ist, Versetzen der intelligenten Batterievorrichtung in den normalen Lademodus über den Hauptmanagementchip (210), wobei die zweite Zeitdauer kürzer als die erste Zeitdauer ist.

11. Betriebsverfahren nach einem der vorhergehenden Ansprüche, ferner aufweisend das Übertragen eines zweiten Befehls an den Hauptmanagementchip (210) über ein Tastaturkürzel, wobei der zweite Befehl ermöglicht, dass der Hauptmanagementchip (210) die intelligente Batterievorrichtung in einen Schnelllademodus versetzt.

## Revendications

1. Dispositif de batterie intelligente, conçu pour être appliqué à un dispositif électronique (100) et pour fournir de l'énergie au dispositif électronique (100), le dispositif de batterie intelligente comprenant :
un bloc-batterie (240) ;
une résistance de détection (260), conçue pour détecter la charge et la décharge du dispositif de batterie intelligente ; et
une puce de gestion principale (210), connectée au bloc-batterie (240), à la résistance de détection (260), et pouvant être connectée au dispositif électronique (100), la puce de gestion principale (210) étant conçue pour gérer la charge et la décharge du dispositif de batterie intelligente ; dans lequel
la puce de gestion principale (210) est conçue pour permettre au dispositif de batterie intelligente d'entrer dans un état d'échec temporaire afin d'arrêter la décharge du dispositif de batterie intelligente, en réponse au fait que la puce de gestion principale (210) détecte un événement de fuite dans le dispositif électronique (100) à travers la résistance de détection (260), lorsque le dispositif électronique (100) n'est pas allumé ; dans lequel
lorsqu'un adaptateur (110) conçu pour fournir une alimentation électrique externe est connecté au dispositif de batterie intelligente, la puce de gestion principale (210) est conçue pour enregistrer un temps d'insertion en continu de l'adaptateur (110) ; et dans lequel
lorsque le temps d'insertion en continu est supérieur à une première période, la puce de gestion principale (210) est conçue pour régler le dispositif de batterie intelligente sur un mode de charge normale.

2. Dispositif de batterie intelligente selon la revendication précédente, dans lequel lorsque la puce de gestion principale (210) reçoit une première instruction, la première instruction est conçue pour permettre à la puce de gestion principale (210) d'abandonner l'état d'échec temporaire, de telle sorte que le dispositif de batterie intelligente peut se décharger normalement.

3. Dispositif de batterie intelligente selon les revendications précédentes, dans lequel la première période est de 168 heures.

4. Dispositif de batterie intelligente selon l'une quelconque des revendications précédentes, dans lequel :
lorsque le temps d'insertion en continu est inférieur à la première période mais supérieur à une seconde période, la puce de gestion principale (210) est conçue pour enregistrer un nombre de fois d'insertion consécutive, dans lequel la seconde période est inférieure à la première période ; et
lorsque le nombre de fois d'insertion consécutive est supérieur ou égal à un nombre de fois spécifique, la puce de gestion principale (210) est conçue pour régler le dispositif de batterie intelligente sur le mode de charge normale.

5. Dispositif de batterie intelligente selon la revendication précédente, dans lequel la seconde période est de 3 heures, et le nombre spécifique de fois est de 10 fois.

6. Dispositif de batterie intelligente selon l'une quelconque des revendications précédentes, comprenant en outre une touche de raccourci, dans lequel lorsque la touche de raccourci est utilisée, la touche de raccourci est conçue pour renvoyer une seconde instruction à la puce de gestion principale (210), dans lequel la seconde instruction est conçue pour permettre à la puce de gestion principale (210) de régler le dispositif de batterie intelligente sur un mode de charge rapide.

7. Dispositif de batterie intelligente selon l'une quelconque des revendications précédentes, comprenant en outre un écran (180), conçu pour afficher si le dispositif de batterie intelligente est dans un mode de charge rapide ou un mode de charge normale.

8. Procédé de fonctionnement d'un dispositif de batterie intelligente, dans lequel le procédé de fonctionnement est appliqué à un dispositif électronique (100) incluant le dispositif de batterie intelligente, le dispositif de batterie intelligente comprend un bloc-batterie (240), une résistance de détection (260) et une puce de gestion principale (210), dans lequel un adaptateur (110) est conçu pour fournir une alimentation électrique externe au dispositif électronique (100) et pour charger le dispositif de batterie intelligente, le procédé de fonctionnement comprenant les étapes consistant à :
détecter si le dispositif électronique (100) subit un événement de fuite par l'intermédiaire de la résistance de détection (260) ;
lorsque le dispositif électronique (100) subit un événement de fuite, permettre au dispositif de batterie intelligente d'entrer dans un état d'échec temporaire par l'intermédiaire de la puce de gestion principale (210), et l'échec temporaire arrête la charge et la décharge du dispositif de batterie intelligente ;
lorsque l'adaptateur (110) est connecté au dispositif électronique, enregistrer un temps d'insertion en continu de l'adaptateur (110) par l'intermédiaire de la puce de gestion principale (210) ; et
lorsque le temps d'insertion en continu est supérieur à une première période, régler le dispositif de batterie intelligente sur un mode de charge normale par l'intermédiaire de la puce de gestion principale (210).

9. Procédé de fonctionnement selon la revendication précédente, comprenant en outre une étape consistant à envoyer une première instruction à la puce de gestion principale (210) par l'intermédiaire d'un raccourci clavier, dans lequel la première instruction permet à la puce de gestion intelligente (210) d'abandonner l'état d'échec temporaire pour permettre au dispositif de batterie intelligente de se décharger normalement.

10. Procédé de fonctionnement selon les revendications précédentes, comprenant en outre les étapes consistant à :
enregistrer un nombre de fois d'insertion consécutive par l'intermédiaire de la puce de gestion principale (210) ; et
lorsque le temps d'insertion en continu est inférieur à la première période mais supérieur à une seconde période et que le nombre de fois d'insertion consécutive est supérieur ou égal à un nombre de fois spécifique, régler le dispositif de batterie intelligente sur le mode de charge normale par l'intermédiaire de la puce de gestion principale (210), dans lequel la seconde période est inférieure à la première période.

11. Procédé de fonctionnement selon l'une quelconque des revendications précédentes, comprenant en outre une étape consistant à envoyer une seconde instruction à la puce de gestion principale (210) par l'intermédiaire d'une touche de raccourci, dans lequel la seconde instruction permet à la puce de gestion intelligente (210) de régler le dispositif de batterie intelligente sur un mode de charge rapide.
